# FASCICULE DE BREVET EUROPEEN

(11) **EP 1 231 560 B1**
(45) Date de publication et mention de la délivrance du brevet: **25.03.2009**
(21) Numéro de dépôt: 02290145.8
(22) Date de dépôt: 21.01.2002
(51) Int. Cl.: G06K 13/08, G06K 7/00

(54) **Dispositif de mise en place et de maintien d'une carte à puce**
Einschub- und Haltevorrichtung für eine IC-karte
Positioning and holding device for a IC card

(30) Priorité: 12.02.2001 FR 0101864
(43) Date de publication de la demande: 14.08.2002
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: Villain, Jean Christophe, 92700 Colombes (FR); Cupif, Bertrand, 92160 Antony (FR); Guillon, Claire, 75017 Paris (FR)
(74) Mandataire: Feray, Valérie

(56) Documents cités:
- EP-A- 0 893 777
- EP-A- 0 982 679
- GB-A- 2 329 055

## Description

L'invention concerne le domaine des cartes à puce électronique qui sont utilisées dans les appareils téléphoniques mobiles et, plus particulièrement, dans de tels appareils, un dispositif pour mettre en place et maintenir une carte à puce en contact avec les bornes de sortie du lecteur de carte à puce.

Un appareil téléphonique mobile est un boîtier qui comprend généralement trois parties :
- une partie centrale qui contient les circuits électroniques,
- une partie avant qui supporte l'écran et les touches, et
- une partie arrière qui supporte la batterie d'alimentation.

La partie arrière est amovible et son enlèvement dévoile la face arrière de la partie centrale, cette face arrière présentant divers contacts mobiles dont les uns servent à connecter la batterie et les autres à connecter, notamment, une carte à puce à son lecteur disposé dans la partie centrale.

Comme la carte à puce est également amovible, la partie centrale comporte un dispositif de mise en place et de maintien de la carte à puce pour que ses contacts, au nombre de six, viennent buter contre les contacts mobiles du lecteur de carte à puce.

Dans l'art antérieur, ce dispositif de mise en place et de maintien de la carte à puce est réalisé de différentes manières qui ont pour défaut principal d'être compliquées en faisant appel à des mécanismes de pivotement et de déplacement longitudinal, ces mécanismes étant coûteux à fabriquer et assembler et fragiles à l'usage.

En outre, certains des dispositifs de l'art antérieur sont tels qu'ils présentent une épaisseur qui augmente d'autant celle du boîtier et qu'ils utilisent une surface importante du circuit imprimé supportant les circuits électroniques.

Un but de la présente invention est donc de réaliser un dispositif de mise en place et de maintien d'une carte à puce sur son lecteur qui est simple, robuste et peu coûteux et peu encombrant.

Ce but est atteint en utilisant la cage de blindage des circuits électroniques et en la configurant pour permettre la mise en place de la carte à puce et son maintien.

L'invention concerne un dispositif de mise en place et de maintien d'une carte à puce électronique sur un lecteur de puce électronique présentant des contacts élastiques, adaptés pour coopérer avec des surfaces de contact disposées sur la carte à puce électronique, au moins les circuits électroniques du lecteur étant enfermés sous un blindage radiofréquence, sous forme d'un couvercle, caractérisé en ce que le dispositif est constitué par un enfoncement partiel de la partie supérieure du couvercle du blindage, à l'exception d'une languette, l'enfoncement présentant une ouverture pour le passage des contacts élastiques, la distance verticale entre le plan des contacts élastiques et la languette permettant le passage de la carte à puce électronique pour sa mise en place et son maintien dans l'enfoncement.

L'enfoncement débouche sur la périphérie du couvercle de blindage pour permettre l'introduction latérale de la carte à puce électronique sous la languette.

La languette est disposée de manière que les contacts élastiques soient situés de part et d'autre de la languette.

L'enfoncement présente au moins un détrompeur pour empêcher une mauvaise mise en place de la carte à puce électronique.

Le dispositif est réalisé par un emboutissage et/ou découpage d'une pièce métallique.

D'autres caractéristiques et avantages de la présente invention apparaîtront à la lecture de la description suivante d'un exemple particulier de réalisation, ladite description étant faite en relation avec les dessins joints dans lesquels :
- la figure 1 est une vue de dessus d'une carte à puce de type SIM pour appareil téléphonique portable,
- la figure 2 est une vue en perspective cavalière d'un support de circuits électroniques équipé d'un dispositif de mise en place et de maintien d'une carte à puce électronique selon l'invention,
- la figure 3 est une vue de dessus du support de la figure 2,
- la figure 4 est une vue en coupe agrandie selon la ligne IV-IV de la figure 3,
- la figure 5 est une vue en coupe agrandie selon la ligne V-V de la figure 3, et
- la figure 6 est une vue de dessus selon la figure 3 montrant la carte à puce en position d'introduction dans le dispositif selon l'invention.

Comme indiqué dans le préambule, le boîtier d'un appareil téléphonique mobile comprend une partie centrale qui contient les circuits électroniques disposés sur un circuit imprimé 10. Ces circuits électroniques peuvent être divisés en trois catégories :
- le circuit de charge de la batterie,
- le circuit d'émission/réception des signaux radiofréquence,
- le circuit de traitement des signaux numériques.

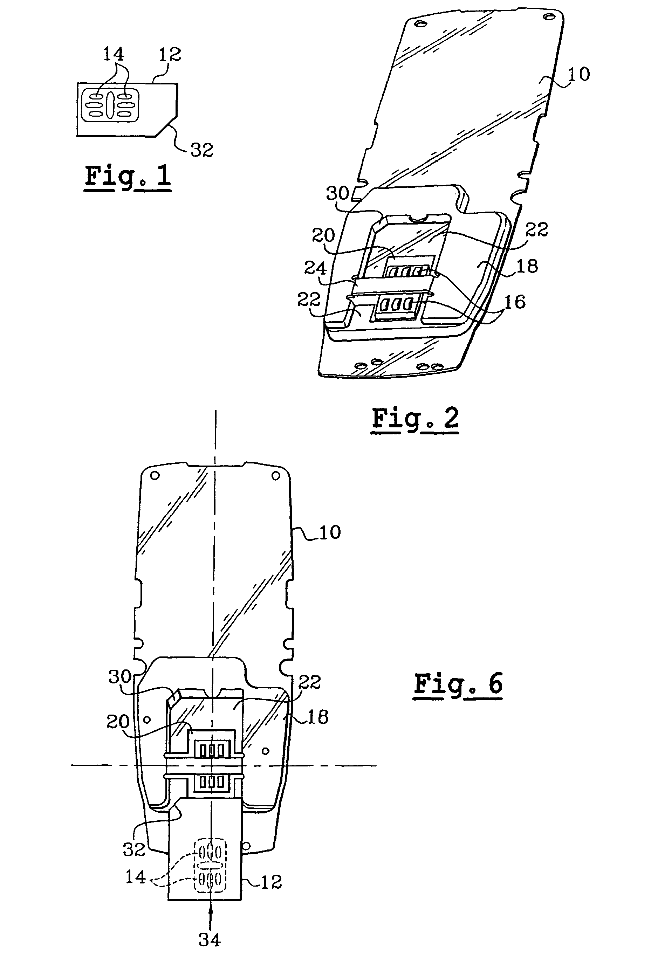

Pour que ces circuits électroniques fonctionnent en vue, notamment, d'établir une liaison téléphonique, il est nécessaire qu'ils lisent des informations contenues dans un circuit électronique introduit lors de l'achat de l'appareil. Ce circuit électronique indispensable est sous la forme d'un circuit intégré, appelé puce électronique, qui est porté par une carte 12 (figure 1). Cette puce électronique présente des contacts galvaniques 14 (six en général) qui coopèrent avec des contacts galvaniques 16 (figure 2) d'un lecteur 28 faisant partie du circuit de traitement des signaux numériques.

L'invention concerne le dispositif de mise en place de cette carte à puce électronique 12 par rapport aux contacts 16 du lecteur 28 et son maintien.

Il est connu que les circuits électroniques émettent des signaux radiofréquence qui perturbent le fonctionnement des circuits électroniques avoisinants. Aussi, il est prévu de les protéger les uns des autres par un blindage qui réalise une cage de Faraday empêchant le passage des signaux radiofréquence perturbateurs.

Ce blindage se présente sous la forme d'un ou plusieurs couvercles métalliques recouvrant les circuits électroniques. Sur les figures, on n'a représenté que le blindage 18 recouvrant les circuits électroniques de traitement numérique, y compris le lecteur de carte à puce 28 dont on a montré les contacts galvaniques mobiles 16. Ce couvercle de blindage 18 est fixé au circuit imprimé 10 par une soudure sur la périphérie inférieure du couvercle.

Selon l'invention, le couvercle de blindage 18 est conformé pour réaliser le dispositif de mise en place et de maintien de la carte à puce électronique 12 sur les contacts 16 du lecteur de carte.

A cet effet, la partie supérieure du couvercle 18 présente, à l'endroit des contacts 18 du lecteur une ouverture 20 pour laisser passer les contacts 18 et un enfoncement partiel 22 pour abaisser la surface supérieure du couvercle à l'exception d'une languette 24 située entre les deux séries de trois contacts 16.

Ainsi, le pourtour de l'ouverture 20 encadre la zone des contacts 16, ces contacts affleurant au-dessus du plan du couvercle tel qu'enfoncé.

La profondeur de l'enfoncement 22 et la hauteur des contacts mobiles 16 sont telles qu'il existe un passage 26 de hauteur suffisante entre la languette 24 et les contacts mobiles 16 pour permettre le déplacement longitudinal de la carte 12.

La périphérie de l'enfoncement 22 est conformée pour une mise en place correcte de la carte 12, notamment en prévoyant un coin 30 dont la forme coopère avec le coin 32 de la carte 12.

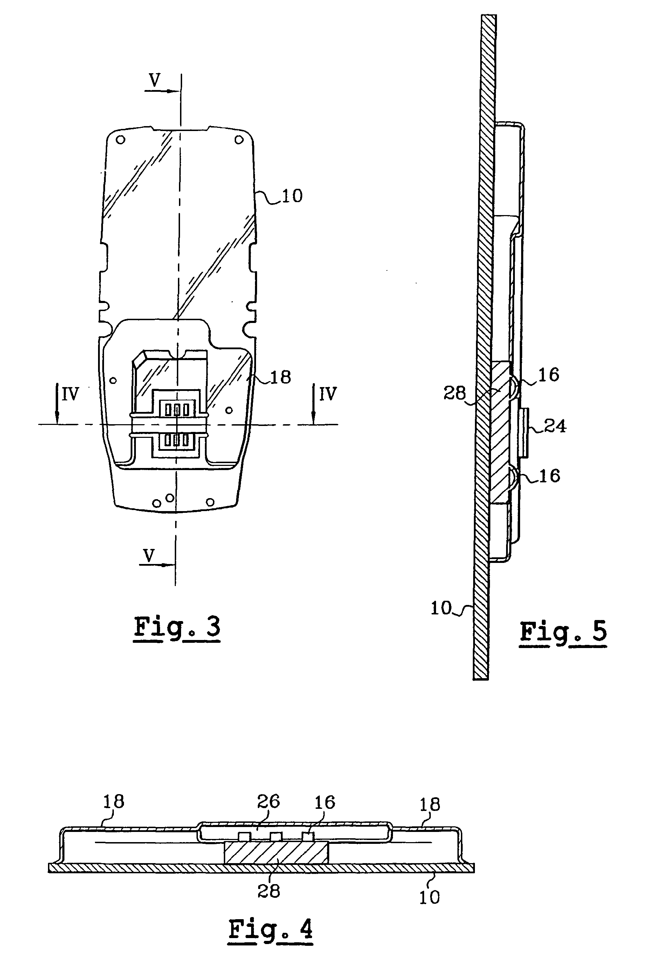

Comme le montrent les figures 4 et 5, la languette 24 est dans un plan qui est situé légèrement au-dessus de la partie supérieure du couvercle de blindage 18. C'est la force de pression des contacts mobiles élastiques 16 qui maintient la carte 12 en place contre la languette 24.

La position de l'ouverture 20 par rapport à l'enfoncement 22 résulte de celle des contacts 14 de la carte par rapport à la carte elle-même et est définie par une norme.

L'enfoncement 22 débouche sur la périphérie du couvercle de blindage 18 pour permettre l'introduction de la carte 12 dans le passage 26 sous la languette 24.

La figure 6 montre l'introduction de la carte 12 sous la languette 24 pour sa mise en place dans l'enfoncement 22, une flèche 34 indiquant le sens d'introduction de la carte 12.

La carte à puce électronique étant flexible, elle peut être introduite de l'autre côté, celui du chanfrein 30 et, dans ce cas, il est prévu une butée (non représentée) de l'autre côté.

Le dispositif selon l'invention peut être réalisé selon différentes technologies, par exemple par emboutissage ou découpage d'une plaque métallique ou encore par plasturgie suivie d'une opération de métallisation de la pièce plastique obtenue.

La description ci-dessus montre la simplicité du dispositif selon l'invention, sa robustesse car il n'y a pas de pièces pivotantes, sa facilité de mise en place, son faible encombrement et son coût peu élevé.

L'invention a été décrite dans son application à un appareil téléphonique mobile mais s'applique à tout appareil utilisant un lecteur de carte à puce comportant un blindage.

## Revendications

1. Dispositif de mise en place et de maintien d'une carte à puce électronique (12) sur un lecteur (28) de puce électronique présentant des contacts élastiques (16), adaptés pour coopérer avec des surfaces de contact (14) disposées sur la carte à puce électronique, au moins les circuits électroniques dudit lecteur (28) étant enfermés sous un blindage radiofréquence, sous forme d'un couvercle (18), **caractérisé en ce que** ledit dispositif est constitué par un enfoncement partiel (22) de la partie supérieure du couvercle du blindage, à l'exception d'une languette (24), ledit enfoncement (22) présentant une ouverture (20) pour le passage des contacts élastiques (16), la distance verticale entre le plan des contacts élastiques (16) et la languette (24) permettant le passage de la carte à puce électronique (12) pour sa mise en place et son maintien dans l'enfoncement (22).

2. Dispositif selon la revendication 1, **caractérisé en ce que** l'enfoncement (22) débouche sur la périphérie du couvercle de blindage (18) pour permettre l'introduction latérale (34) de la carte à puce électronique (12) sous la languette (24).

3. Dispositif selon la revendication 1 ou 2, **caractérisé en ce que** la languette (24) est disposée de manière que les contacts élastiques (16) soient situés de part et d'autre de la languette (24).

4. Dispositif selon l'une des revendications 1 à 3, **caractérisé en ce que** l'enfoncement (22) présente au moins un détrompeur (30) qui coopère avec un détrompeur (32) de la carte (12) pour empêcher une mauvaise mise en place de la carte à puce électronique (12).

5. Dispositif selon l'une des revendications 1 à 4, **caractérisé en ce qu'**il est réalisé par emboutissage d'une pièce métallique.

6. Dispositif selon l'une des revendications 1 à 4, **caractérisé en ce qu'**il est réalisé par une pièce plastique métallisée.

7. Terminal comportant un lecteur de carte à puces apte à recevoir une carte à puce électronique destinée à être maintenue sur un circuit imprimé du terminal, le circuit imprimé étant protégé par un blindage, **caractérisé en ce qu'**il comprend un dispositif selon l'une des revendications 1 à 6.

## Claims

1. A device for placing and holding an electronic chip card (12) on an electronic chip reader (28) having flexible contacts (16), adapted for cooperating with contact surfaces (14) arranged on the electronic chip card, with at least the electronic circuits of said reader (28) being enclosed under a radiofrequency shield, in the form of a lid (18), **characterized in that** said device is composed of a partial recess (22) of the top of the shielding lid, except for a tab (24), said recess (22) having an opening (20) for the flexible contacts (16) to go through, the vertical distance between the plane of the flexible contacts (16) and the tab (24) allowing the electronic chip card (12) to go through for placing and holding thereof in the recess (22).

2. The device according to claim 1, **characterized in that** the recess (22) opens onto the periphery of the shielding lid (18) in order to allow for the lateral introduction (34) of the electronic chip card (12) under the tab (24).

3. The device according to claim 1 or 2, **characterized in that** the tab (24) is arranged so that the flexible contacts (16) are located on either side of the tab (24).

4. The device according to any of claims 1 to 3, **characterized in that** the recess (22) has at least one locating pin (30) cooperating with a locating pin (32) of the card (12) in order to prevent incorrect placement of the electronic chip card (12).

5. The device according to any of claims 1 to 4, **characterized in that** it is made by stamping a metal part.

6. The device according to any of claims 1 to 4, **characterized in that** it is made from a metal-coated plastic part.

7. A terminal, comprising a chip card reader, capable of receiving an electronic chip card designed to be held on a printed circuit of the terminal, the printed circuit being protected by a shield, **characterized in that** it comprises a device according to any of claims 1 to 6.

## Patentansprüche

1. Vorrichtung zum Einlegen und Festhalten einer elektronischen Chipkarte (12) in einem elektronischen Chiplesegerät (28) mit elastischen Kontakten (16), die dazu geeignet sind, mit Kontaktflächen (14) zusammenzuwirken, die auf der elektronischen Chipkarte angeordnet sind, wobei mindestens die elektronischen Schaltkreise des Lesegeräts (28) unter einer Hochfrequenzabschirmung in Form eines Deckels (18) eingeschlossen sind, **dadurch gekennzeichnet, dass** die Vorrichtung aus einer Teilvertiefung (22) des oberen Teils des Abschirmdeckels, mit Ausnahme eines Stegs (24), besteht, wobei die Vertiefung (22) eine Öffnung (20) zum Hindurchführen der elastischen Kontakte (16) aufweist, wobei der senkrechte Abstand zwischen der Ebene der elastischen Kontakte (16) und dem Steg (24) das Hindurchführen der elektronischen Chipkarte (12) ermöglicht, um diese in die Vertiefung (22) einzulegen und dort zu festzuhalten.

2. Vorrichtung nach Anspruch 1, **dadurch gekennzeichnet, dass** die Vertiefung (22) in den Umfang des Abschirmdeckels (18) einmündet, um das seitliche Einführen (34) der elektronischen Chipkarte (12) unter den Steg (24) zu ermöglichen.

3. Vorrichtung nach Anspruch 1 oder 2, **dadurch gekennzeichnet, dass** der Steg (24) derart angeordnet ist, dass die elastischen Kontakte (16) sich auf beiden Seiten des Stegs (24) befinden.

4. Vorrichtung nach einem der Ansprüche 1 bis 3, **dadurch gekennzeichnet, dass** die Vertiefung (22) mindestens eine Unverwechselbarkeitseinrichtung (30) aufweist, die mit einer Unverwechselbarkeitseinrichtung (32) der Karte (12) zusammenwirkt, um einen falsches Einlegen der elektronischen Chipkarte (12) zu verhindern.

5. Vorrichtung nach einem der Ansprüche 1 bis 4, **dadurch gekennzeichnet, dass** sie durch Prägen eines Metallteils hergestellt wird.

6. Vorrichtung nach einem der Ansprüche 1 bis 4, **dadurch gekennzeichnet, dass** sie aus einem metallisierten Plastikteil hergestellt wird.

7. Endgerät, umfassend ein Chipkartenlesegerät, das in der Lage ist, eine elektronische Chipkarte aufzunehmen, die dazu gedacht ist, auf einer gedruckten Schaltung des Endgeräts festgehalten zu werden, wobei die gedruckte Schaltung durch eine Abschirmung geschützt ist, **dadurch gekennzeichnet, dass** es eine Vorrichtung nach einem der Ansprüche 1 bis 6 umfasst.
